# EUROPÄISCHE PATENTSCHRIFT

(11) **EP 3 271 596 B1**
(45) Veröffentlichungstag und Bekanntmachung des Hinweises auf die Patenterteilung: **17.11.2021**
(21) Anmeldenummer: 15710516.4
(22) Anmeldetag: 18.03.2015
(51) Int. Cl.: F16C 17/10

(54) **HYDRODYNAMISCHES GLEITLAGER**
HYDRODYNAMIC SLIDING BEARING
PALIER LISSE HYDRODYNAMIQUE

(43) Veröffentlichungstag der Anmeldung: 24.01.2018
(60) Teilanmeldung: 21179977.0
(73) Patentinhaber: Berger, Martin, 75038 Oberderdingen (DE)
(72) Erfinder: Berger, Martin, 75038 Oberderdingen (DE)
(74) Vertreter: Herrmann, Jochen
(86) Internationale Anmeldenummer: PCT/EP2015/055734
(87) Internationale Veröffentlichungsnummer: WO 2016/146190

(56) Entgegenhaltungen:
- EP-A1- 0 780 586
- EP-A1- 0 780 586
- DE-A1- 10 261 869
- DE-A1- 10 261 869
- DE-A1-102013 110 409
- DE-A1-102013 110 409
- JP-A- H0 932 849
- JP-U- S5 594 914
- US-A- 5 518 319
- US-A- 5 518 319
- US-A- 5 971 615
- US-A- 5 971 615
- US-A1- 2007 104 400
- US-A1- 2007 104 400

## Beschreibung

Die Erfindung betrifft ein hydrodynamisches Gleitlager mit einem Rotor und einem Stator, wobei der Rotor gegenüber dem Stator drehbar ist, wobei eine Rotor-Lagerfläche einer Gegenfläche des Stators zur hydrodynamischen Druckerzeugung im Bereich eines konvergierenden Spaltes gegenübersteht.

Rotierende Maschinenelemente, wie z.B. Wellen, Laufrollen, Zahn- oder Pumpenräder benötigen eine Führung in radialer und axialer Richtung um Kräfte und Drehmomente übertragen zu können. Diese Aufgabe kann von hydrodynamisch wirkenden Gleitlagern übernommen werden. Die Funktion dieses Lagertyps basiert auf dem physikalischen Prinzip der hydrodynamischen Druckerzeugung. Zwischen dem Rotor und dem Stator ist bei hydrodynamischen Gleitlagern ein geeigneter Schmierstoff gehalten. Bei einer Drehbewegung des Rotors relativ zum Stator entstehen im Schmierstoff Scherkräfte, die diesen dann mit einer bestimmten Geschwindigkeit durch das Lager transportieren. Bei einem konvergierenden Lagerspalt ergibt sich hieraus ein hydrodynamischer Druckanstieg, bei divergierendem Spaltverlauf - im Anschluss an den konvergierenden Lagerspalt, entsteht ein Druckabfall. Ist die Relativgeschwindigkeit zwischen Rotor und Stator ausreichend hoch, baut sich durch den hydrodynamischen Druck eine ausreichend dicke Schmierstoffschicht auf, welche die beiden Gleitpartner voneinander trennt. Die Reibung findet in diesem Betriebszustand in der Schmierstoffschicht statt (Flüssigkeitsreibung). Die so erzeugten hydrodynamischen Drücke halten in Verbindung mit der eingesetzten Fläche den äußeren Kräften das Gleichgewicht und beschreiben die Tragfähigkeit des Gleitlagers. Zur Erzeugung des hydrodynamischen Drucks wird keine zusätzliche Energie in Form von Druckarbeit bzw. ein Schmierstoffvolumen, welches mit einem bestimmten Druck über Nuten oder Taschen zugeführt wird, benötigt. Die Tragfähigkeit ergibt sich aus den Betriebsgrößen. Die Grundlagen zur numerischen Berechnung des hydrodynamischen Drucks sind in der DIN 31562 Teil 1 (DIN Taschenbuch 198; Gleitlager 2; Beuth Verlag GmbH; Berlin, Köln 1991) dargestellt.

Zum Stand der Technik gehören zwei grundsätzliche Lagertypen:
1. Hydrodynamische Radialgleitlager
   Hydrodynamische Radialgleitlager werden häufig in Form von zylindrischen Buchsen als segmentierte Variante oder als Kippsegmentlager ausgeführt. Siehe hierzu (DIN 31562 Teil 2 und VDI-Richtlinien 2204). Die hydrodynamisch wirksamen Elemente (z.B. Segmente) des Gleitlagers sind zylindrisch und damit parallel zur Rotationsachse angeordnet. Der konvergierende Spaltverlauf ergibt sich aus der exzentrischen Lage vom Rotor zum Stator.
2. Hydrodynamische Axialgleitlager
   Hydrodynamische Axialgleitlager werden in Form einer Anlaufscheibe mit diversen Nuten bzw. Oberflächenmodifikationen in Form von Staurändern, Keilflächen oder Spiralrillen ausgebildet. Sie können auch als so genanntes Kippsegment-Lager gestaltet sein (siehe hierzu DIN 31563 Teil 1 bis 3; DIN 31564 Teil 1 bis 3). Die Anordnung des Axialgleitlagers erfolgt dabei orthogonal zur Rotationsachse, mit einer in der Regel rotierenden Spurscheibe als Gegenlaufpartner. Der für die hydrodynamische Druckerzeugung benötigte konvergierende Spaltverlauf ergibt sich aus der Gestaltung der Oberflächenstrukturen (Taschen, Rampen, etc.), durch die Neigung der kippbeweglichen Segmente oder einem Winkelversatz zwischen Lager zur Spurscheibe.

Wenn bei einer technischen Lösung sowohl radiale als auch axiale Lasten entstehen, so müssen beide vorgenannten Lagertypen zum Einsatz kommen. Die Axiallasten werden dann über ein Axialgleitlager und die Radiallasten über das Radialgleitlager abgetragen. Eine derartige Lösung ist in der DE 4217268 C2 beschrieben. Die beiden Lagertypen sind dann jeweils getrennt voneinander zu berechnen und auszulegen, wodurch sowohl bei der Konstruktion als auch bei der Produktion entsprechend hohe Kosten entstehen.

Aus diesem Grund werden bei solchen Lastfällen häufig hydrostatische Gleitlager eingesetzt, die entsprechend ausgelegt sind. Dabei wird der Einsatz einer Druckpumpe erforderlich die, wie vorstehend erwähnt, einen permanenten Energiebedarf hat. Derartige Lösungen sind in der Druckschrift US 2,710,234 A beschrieben.

Eine weitere Möglichkeit besteht darin sogenannte Spiralrillen in die Rotor-Lagerfläche einzubringen um darüber einen Druckaufbau zu erzeugen. Derartige Lösungen sind in der Druckschrift US 3,265,452 A beschrieben. Solche Rillen bedingen einen zusätzlichen Fertigungsaufwand.

Eine weitere Möglichkeit radiale als auch axiale Lasten zu tragen besteht darin, sogenannte sphärischen Lager oder Gelenklager (EP1482189A1) bzw. Kugelgelenke (DE10028984C2) einzusetzen. Diese sind jedoch nicht für stationär hohe Gleitgeschwindigkeiten durch Rotation des Gegenkörpers (Rotors) um seine Achse konzipiert. Vielmehr besteht die Aufgabe solcher Lager in der kippbeweglichen bzw. ausgleichenden Lagerung von Wellenversatz. Bekannt sind hier Gelenkaugen, wie sie z.B. bei Hydraulikzylindern eingesetzt werden. Die Gleiche Funktion übernehmen auch Hüftgelenksprothesen z.B. nach (WO0154613A2).

US 5,518,319 offenbart ein Gleitlager, bei dem sich eine konvexe Lagerkontur des Stators und eine konkave Lagerkontur des Rotors gegenüberstehen. In weiteren Ausführungsbeispielen zeigt dieses Dokument Gleitlager mit linearen Lagerabschnitten.

Es ist Aufgabe der Erfindung, ein hydrodynamisches Gleitlager bereitzustellen, das verbesserte Anwendungseigenschaften aufweist.

Diese Aufgabe wird mit einem hydrodynamischen Gleitlager gemäß Anspruch 1 gelöst
Entsprechend betrifft die Erfindung ein hydrodynamisches Gleitlager mit einem Rotor und einem Stator wobei der Rotor gegenüber dem Stator drehbar ist, wobei eine Rotor-Lagerfläche einer Gegenfläche des Stators zur hydrodynamischen Druckerzeugung im Bereich eines konvergierenden Spaltes gegenübersteht,wobei die Rotor-Lagerfläche und/oder die Gegenfläche bei einem Schnitt längs und durch die Rotationsachse in Schnittansicht, eine durchgehende Lagerkontur bildet, die aus wenigstens zwei Konturabschnitten gebildet ist, wobei die Konturabschnitte als Geraden und/oder Wölbungen ausgebildet sind, um hydrodynamische Tragfähigkeiten in radialer und axialer Richtung zu erzeugen, dass die Rotor-Lagerfläche und/oder die Gegenfläche zwei oder mehrere Konturabschnitte aufweist, die die Rotor-Lagerfläche (13) oder die Gegenfläche (21) in Richtung der Rotationsachse (R) begrenzen, und dass zwischen diesen Konturabschnitten (21.1, 21.3) ein oder mehrere weitere Konturabschnitte (21.2) angeordnet sind, um eine durchgehende stetig differenzierbare Lagerkontur zu bilden.

Erfindungsgemäß lassen sich mithin mit der durchgehenden und im Querschnitt variierenden Lagerkontur im konvergierenden Spalt Druckbereiche erzeugen, die sowohl die axialen als auch die radialen Lasten abtragen. Dadurch entstehen in einem hydrodynamischen Gleitlager dreidimensionale hydrodynamische Tragfähigkeiten. Die Erfindung nutzt den physikalischen Effekt, wonach der lokal erzeugte hydrodynamische Druck normal auf eine Fläche wirkt. Daraus ergeben sich lokale Tragfähigkeiten. Liegt nun gemäß der Erfindung eine Oberfläche zugrunde, welche dreidimensional ausgestaltet ist, ergeben sich daraus lokale Kraftkomponenten mit entsprechenden Richtungen. Aus der integralen Summe der einzelnen Kraftkomponenten können die Tragfähigkeitskomponenten des Lagers und damit die dreidimensionale Tragfähigkeit berechnet und für den jeweiligen Anwendungsfall ausgelegt werden.

Dadurch dass nun in einem einzigen hydrodynamischen Gleitlager sowohl axiale als auch radiale Lasten abtragbar sind, wird für die zu bewältigenden Lageraufgaben nur ein Maschinenelement konstruiert und produziert. Hierdurch ergibt sich eine deutliche Reduzierung des Teile- und Montageaufwandes. Dabei wird über die Nutzung der hydrodynamischen Druckerzeugung ein Verzicht auf die Zufuhr externer Energie, beispielsweise durch die Verwendung einer Pumpe zur Erzeugung hydrostatischen Druckes möglich. Dies senkt sowohl die Kosten für die Konstruktion, die Herstellung sowie die Betriebskosten. Dadurch, dass eine durchgehende Lagerkontur aus mehreren Konturabschnitten gebildet ist, ergeben sich ein oder mehrere konvergierende Spalte und damit axiale und radiale Tragfähigkeiten. Deren vektorielle Summe ist größer als die Tragfähigkeit vergleichbarer Lageranordnungen, bei denen ein Axiallager mit einem Radiallager kombiniert ist und diese separat zur Erzeugung einer Tragfähigkeit genutzt werden. Dies hat zur Folge, dass mit den erfindungsgemäßen hydrodynamischen Gleitlagern eine höhere Leistungsdichte auf geringerem Raum erzeugt werden kann. Weiterhin sinkt dadurch der erforderliche Materialbedarf für die Lageranordnung.

Gemäß einer bevorzugten Erfindungsvariante kann es vorgesehen sein, dass die Rotor-Lagerfläche und die Gegenfläche ein Mehrflächengleitlager, Kipp-Segmentlager, ein Schwimmbuchsenlager oder ein zylindrisches Gleitlager aufweisen oder bilden.

Gemäß einer weiter bevorzugten Erfindungsvariante kann es vorgesehen sein, dass die Gestaltung der Rotor-Lagerfläche derart von der Gestaltung der Gegenfläche des Stators abweicht, das die Rotor-Lagerfläche und die Gegenfläche nicht im Flächenkontakt aneinanderliegen, insbesondere nicht vollflächig aneinanderliegen. Dies kann z.B. erfolgen, wenn der Rotor und der Stator auf Block fahren. Hierdurch wird verhindert, dass eine Geometrie vorliegt welche keinen hydrodynamischen Druck erzeugen kann, wodurch ohne unterstützende Maßnahmen ein Anlaufen des Lagers nicht oder nur schwierig möglich wäre.

Eine denkbare Erfindungsvariante ist dergestalt, dass von der Rotor-Lagerfläche und/oder der Gegenfläche, insbesondere einteilig angeformte Erhebungen vorstehen. Mit den Erhebungen kann bei entsprechender Gestaltung beispielsweise auch der vorstehende Effekt verwirklicht werden, wonach die Rotor-Lagerfläche und die Gegenfläche nicht vollflächig aneinander liegen. Darüber hinaus kann mit den Erhebungen der hydrodynamisch wirkende Spaltverlauf angepasst und das Betriebsverhalten des hydrodynamischen Lagers eingestellt werden. Beispielsweise können hierzu lokale Deformationen im Bereich der Rotor-Lagerfläche oder der Gegenfläche vorgenommen werden. Diese Deformationen können durch die Verformung infolge lokal generierter Druckspannungen bewirkt werden. Die Erhebungen sollten dabei vorteilhafter Weise kleiner sein als das radiale Lagerspiel.

Ein erfindungsgemäßes hydrodynamisches Gleitlager kann auch dergestalt sein, dass die Rotor-Lagerfläche und/oder die Gegenfläche Bereiche mit unterschiedlichem thermischem Ausdehnungskoeffizienten aufweist. Mit dieser Maßnahme kann abhängig von der am Lager anstehenden Temperatur der Spaltverlauf beeinflusst werden, wodurch sich eine Änderung des Tragverhaltens des hydrodynamischen Gleitlagers ergibt. Beispielsweise kann ein Anwendungsfall vorgesehen sein, bei dem gezielt bei einer Erhöhung der Temperatur die gesamte Lagertragfähigkeit oder nur ein Kraftanteil, beispielsweise die axiale Tragfähigkeit erhöht wird. Die thermischen Ausdehnungskoeffizienten können derart miteinander kombiniert werden, dass bei Temperaturänderungen in diesen Bereichen Erhebungen/ Vertiefungen entstehen, worüber beispielsweise auch das Verhalten des Lagers den Betriebsbedingungen angepasst werden kann.

Zusätzlich oder alternativ kann es zu diesem Zweck auch vorgesehen sein, dass die Rotor-Lagerfläche und/oder die Gegenfläche Bereiche mit unterschiedlichem Elastizitätsmodul oder konstruktiv bedingtem Verformungsverhalten aufweisen. Dies hat zur Folge, dass im Spalt bei einer Veränderung des anstehenden Drucks im Schmiermittel Geometrieänderungen der Rotor-Lagerfläche oder der Gegenfläche entstehen. Hierdurch wird dann die Tragfähigkeit des Lagers beeinflusst. Denkbar ist auch, das Lagerverhalten den Betriebsbedingungen dadurch anzupassen, dass in der Rotor- Lagerfläche oder der Gegenfläche Ausnehmungen, Löcher oder dergleichen vorgesehen sind. Auch hierdurch können Zonen unterschiedlicher thermischer Ausdehnung oder Elastizität gebildet werden

Erfindungsgemäß ist es vorgesehen, dass die Rotor-Lagerfläche und/oder die Gegenfläche zwei oder mehrere Konturabschnitte aufweist, die die Rotor-Lagerfläche oder die Gegenfläche in Richtung der Rotationsachse begrenzen, und dass zwischen diesen Konturabschnitten ein oder mehrere weitere Konturabschnitte angeordnet sind, um die durchgehende Lagerkontur zu bilden. Hierdurch kann auf nahezu beliebige Lastfälle eine Lagerauslegung vorgenommen werden.

Weiterhin ist es denkbar, dass die Rotor-Lagerfläche und/oder die Gegenfläche mindestens einen konvexen und einen konkaven Konturabschnitt aufweist, die mittelbar über einen weiteren Konturabschnitt oder unmittelbar ineinander übergeleitet sind. Mit den kombinierten konvexen und konkaven Konturabschnitten in der Lagerkontur können harmonische Übergänge gebildet werden, die eine Lagergestaltung ermöglichen, bei der eine große Anpassfähigkeit auf wechselnde Lagerbelastungen und /oder Lastrichtungen während des Betriebs möglich ist.

Die Erfindung wird im Folgenden anhand von in den Zeichnungen dargestellten Ausführungsbeispielen näher erläutert. Es zeigen:
- Fig. 1: in schematischer Darstellung ein hydrodynamisches Gleitlager mit einem Rotor und einem Stator in Schnittansicht,
- Fig. 2: eine weitere alternative Ausgestaltung eines hydrodynamischen Gleitlagers in Schnittansicht,
- Fig. 3 bis 6: weitere alternative Ausgestaltungsvarianten eines hydrodynamischen Gleitlagers, wobei der Stator im Schnitt gezeigt ist und
- Fig. 7: ein Detail eines Stators in vergrößerter Ansicht.

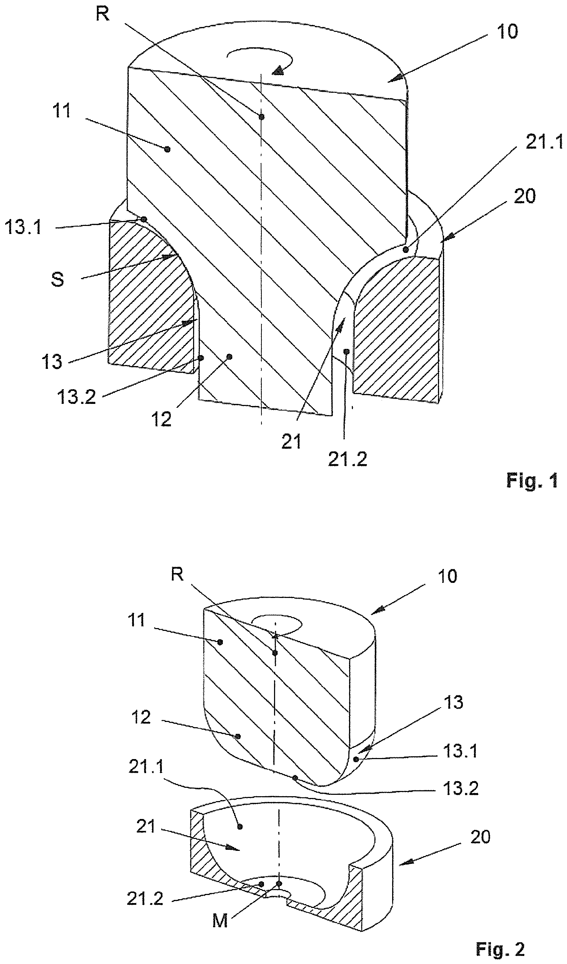

Fig. 1 zeigt ein hydrodynamisches Gleitlager mit einem Rotor 10 und einem Stator 20. Dabei ist eine Schnittdarstellung längs der Rotorachse R des Rotors 10 gewählt. Der Rotor 10 besitzt ein Anschlussstück 11 an das sich ein Lagerabschnitt 12 anschließt. An dem Anschlussstück 11 kann ein Maschinenbauteil, beispielsweise ein Zahnrad oder dergleichen mittelbar oder unmittelbar angekoppelt werden. Der Lagerabschnitt 12 besitzt eine insbesondere rotationssymetrische Rotor-Lagerfläche 13. Dabei bildet die Rotor-Lagerfläche eine durchgehende Lagerkontur. Diese Lagerkontur wird (nicht erfindungsgemäß) von zwei Konturabschnitten 13.1 und 13.2 gebildet. Die Lagerkontur ist durchgängig. Entlang der Rotationsachse (Mittellängsachse) kann mithin im Rahmen der Erfindung der Abstand der Lagerkontur zur Rotatationsachse variieren. Insbesondere ist, wie dies die Fig. 1 zeigt, im vorliegenden Ausführungsbeispiel die Lagerkontur stetig differenzierbar Bei stetig differenzierbaren Lagerkonturen ist insbesondere eine einfache numerische Lagerberechnung möglich und es werden Tragfähigkeiten über die gesamte Lagerkontur hinweg möglich. Die Gegenfläche 21 kann ebenfalls rotationssymetrisch sein.

Der Stator 20 ist mit einer Aufnahme für den Rotor 10 gestaltet. Er weist eine Gegenfläche 21 auf. Diese Gegenfläche 21 bildet eine nicht erfindungsgemäße Lagerkontur, die von einer konvexen Wölbung und einem hohlzylindrischen Bereich erzeugt ist. Die konvexe Wölbung und der hohlzylindrische Bereich bilden Konturabschnitte 21.1 und 21.2. Die Gegenfläche 21 bildet ebenfalls eine durchgängige Lagerkontur und ist wie die Rotor-Lagerfläche 13 stetig differenzierbar.

Der Stator 20 ist im Rahmen der Erfindung derart angeordnet, dass zwischen dem Rotor 10 und dem Stator 20 eine Relativgeschwindigkeit zur hydrodynamischen Druckerzeugung erreicht werden kann. Der Stator 20 kann ortsfest eingebaut, oder ebenfalls drehbar, beispielsweise als Schwimmbuchse ausgebildet sein.

Im zusammengesetzten Zustand des hydrodynamischen Gleitlagers steht die Rotor-Lagerfläche 13 der Gegenfläche 21 gegenüber. Wie Fig. 1 erkennen lässt, kann die Lagerkontur der Rotor-Lagerfläche 13 von der Lagerkontur der Gegenfläche 21 geringfügig abweichen. Dies wird mit unterschiedlichen Wölbungen der Konturabschnitte 13.1 und 21.1 erzeugt. Mit dieser Maßnahme wird verhindert, dass die Rotor-Lagerfläche 13 und die Gegenfläche 21 flächig, insbesondere vollflächig aneinanderliegen, sodass eine Geometrie vorliegt welche keinen hydrodynamischen Druck erzeugen kann.

Fig. 1 symbolisiert eine Betriebsdarstellung des hydrodynamischen Gleitlagers, bei der sich durch die exzentrische Lage des Rotors 10 zum Stator 20 in der linken Bilddarstellung ein in axialer und radialer Richtung konvergierender Spalt S ergibt. Das zwischen der Rotor-Lagerfläche 13 und der Gegenfläche 21 geführte Schmiermittel erzeugt im Bereich des konvergierenden Spaltes einen Druck, der die Tragfähigkeit des hydrodynamischen Gleitlagers bestimmt. An jeder Stelle wirkt dabei der Druck normal zu der Rotor-Lagerfläche 13 bzw. der Gegenfläche 21. Dadurch ergeben sich sowohl axiale als auch radial zur Rotationsachse R wirkende Kraftkomponenten. Die integrale Summe dieser Kraftkomponenten bestimmt die Tragfähigkeit des Lagers sowohl in Axialrichtung als auch in Radialrichtung.

Fig. 2 zeigt eine nicht erfindungsgemäße Ausgestaltungsvariante eines hydrodynamischen Gleitlagers. Dabei wird die Rotor-Lagerfläche 13 von zwei Konturabschnitten 13.1, 13.2, nämlich von einer konvexen Wölbung und einer Planfläche senkrecht zur Mittellängsachse gebildet. Die Gegenfläche 21 hat eine entsprechende Kontur (Konturabschnitte 21.1 ,21.2).

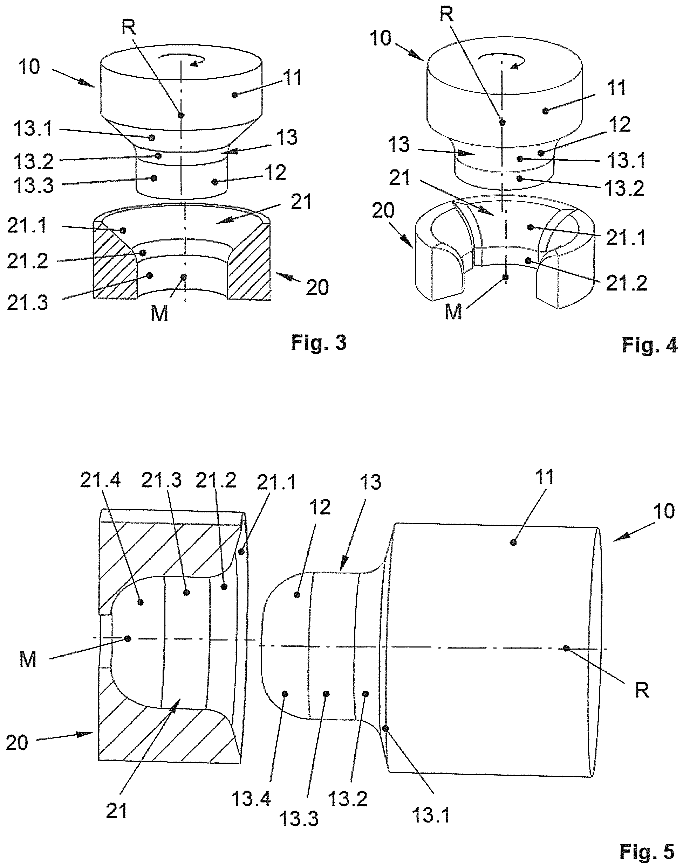

Fig. 3 zeigt eine Ausgestaltung eines erfindungsgemäßen hydrodynamischen Gleitlagers. Der Rotor 10 besitzt dabei eine Rotor-Lagerfläche 13 mit drei Konturabschnitten 13.1, 13.2 und 13.3. Der Konturabschnitt 13.1 wird von einem Stumpfkegel gebildet. Der Konturabschnitt 13.3 ist zylindrisch ausgebildet. Der Übergangsbereich zwischen den Konturabschnitten 13.1 und 13.3 wird von einem Konturabschnitt 13.2 gebildet, der als konkave Wölbung ausgebildet ist. Dabei ist die Gestaltung derart, dass die Konturabschnitte 13.1 und 13.3 kontinuierlich ineinander übergehen. Damit ist die Lagerkontur 13 in Richtung der Rotationsachse R kontinuierlich differenzierbar.

Die Gegenfläche 21 des Stators 20 ist entsprechend aus drei Konturabschnitten 21.1 bis 21.3 zusammengesetzt. Der Konturabschnitt 21.1 ist als kegelförmige Aufnahme ausgebildet. An diesen Konturabschnitt 21.1 schließt sich der Konturabschnitt 21.2 als konvexe Wölbung an. Diese konvexe Wölbung geht in den Konturabschnitt 21.3 über, der als Hohlzylinder ausgebildet ist. In zusammengesetztem Zustand stehen sich die Konturabschnitte 13.1 und 21.1; 13.2 und 21.2 bzw. 13.3 und 21.3 gegenüber. Mit den Konturabschnitten 13.3 und 21.3 werden aufgrund der zylindrischen Ausbildung alleine Lagerkräfte in Radialrichtung erzeugt. Die Konturabschnitte 13.1 und 13.2 bzw. 21.1 und 21.2 dagegen erzeugen Kraftkomponenten sowohl in Radialrichtung als auch in Axialrichtung.

Fig.4 zeigt ein hydrodynamisches Mehrflächen- oder Segmentgleitlager bei dem die Rotor-Lagerfläche 13, nicht erfindungsgemäß aus zwei Konturabschnitten 13.1 und 13.2 durchgängig zusammengesetzt ist. Der Konturabschnitt 13.1 ist als konkave Wölbung ausgebildet an den sich der zylindrische Konturabschnitt 13.2 anschließt. Entsprechend ist die Gegenfläche 21 des Stators 20 mit zwei Konturabschnitten 21.1 und 21.2 gebildet. Der Konturabschnitt 21.1 ist als konvexe Wölbung ausgeführt. An diesem Konturabschnitt 21.1 schließt sich der Konturabschnitt 21.2 in Form eines Hohlzylinders an. Hier werden wieder im Bereich der Konturabschnitte 13.2 und 21.2 alleine Kräfte in Radialrichtung erzeugt. Im Bereich der Konturabschnitte 13.1 und 21.1 werden im konvergierenden Spalt S sowohl axiale als auch radiale Kraftkomponenten erzeugt.

Fig. 5 zeigt eine Gestaltung eines erfindungsgemäßen hydrodynamischen Gleitlagers bei dem die Rotor-Lagerfläche 13 aus vier Konturabschnitten 13.1 bis 13.4 durchgängig zusammengesetzt ist. Der Konturabschnitt 13.1 ist als Stumpfkegel mit relativ großem Öffnungswinkel ausgeführt. Der Konturabschnitt 13.2 schließt sich in Form einer konkaven Wölbung an. An den Konturabschnitt 13.2 schließt sich unmittelbar der Konturabschnitt 13.3 in Form eines Zylinders an. Der Konturabschnitt 13.3 geht in den Konturabschnitt 13.4 über, der als konvexe Wölbung ausgeführt ist. Der Stator 20 weist eine Gegenfläche 21 mit vier Konturabschnitten 21.1 und 21.4 auf. Der Konturabschnitt 21.1 bildet eine kegelförmige Aufnahme, die in eine konvexe Wölbung übergeht, die von dem Konturabschnitt 21.2 gebildet ist. An den Konturabschnitt 21.2 schließt sich der Konturabschnitt 21.3 in Form einer hohlzylindrischen Aufnahme an. Die Gegenfläche 21 schließt mit dem Konturabschnitt 21.4 in Form einer konkaven Wölbung ab. Im zusammengesetzten Zustand und im Betrieb erzeugt das in der Fig. 5 dargestellte hydrodynamische Gleitlager im Bereich der gegenüberstehenden Konturabschnitte 13.3 und 21.3 radiale Kraftkomponenten. Demgegenüber erzeugen die zugeordneten Konturabschnitte 13.1, 13.2, 13.4, 21.1, 21.2 und 21.4 sowohl radiale als auch axiale Kraftkomponenten.

Während des Betriebs der hydrodynamischen Gleitlager gemäß den Fig. 1 bis 5 bzw. den erfindungsgemäßen hydrodynamischen Gleitlagern kann die auf das hydrodynamische Gleitlager einwirkende externe Kraft bezüglich ihres Betrages und ihrer Richtung variieren. Infolge einer solchen Variation verändert sich auch die Zuordnung der Rotationsachse R des Rotors 10 zu der Mittellängsachse M des Stators 20. Dabei kann die Veränderung sowohl ein Winkelversatz zwischen der Rotorachse R und der Mittellängsachse M als auch ein Radialversatz oder ein Axialversatz sein. Insbesondere ist es vorstellbar, dass sämtliche Versatzarten gleichzeitig auftreten. Auf eine solche Veränderung kann das erfindungsgemäße hydrodynamische Gleitlager reagieren. Bei einer derartigen Verstellung des Rotors 10 gegenüber dem Stator 20 verändert sich die Lage und die Geometrie des konvergierenden Spalt S. Eine Veränderung des konvertierenden Spaltes S führt zu einer Veränderung der Kraftkomponenten im konvergierenden Spalt S, die die Tragfähigkeit des hydrodynamischen Gleitlagers bestimmen. Wirkt beispielsweise bei dem hydrodynamischen Gleitlager gemäß Fig. 5 eine erhöhte Axialkraft auf den Rotor 10 ein, so verändert sich der konvergierende Spalt im Bereich der Konturabschnitte 13.1, 13.2, 13.4 bzw. 21.1, 21.2 und 21.4. Aufgrund dieser Veränderung der Geometrie des hydrodynamischen Spaltes werden höhere Drücke in diesen Bereichen erzielt, die zu einer Vergrößerung der axialen Tragfähigkeit führen. Somit kann die einwirkende Axialkraft kompensiert werden. Gleiche Effekte werden bei sich ändernden Radiallasten bzw. einer Verstellung der Rotationsachse R zu der Mittellängsachse M wirksam.

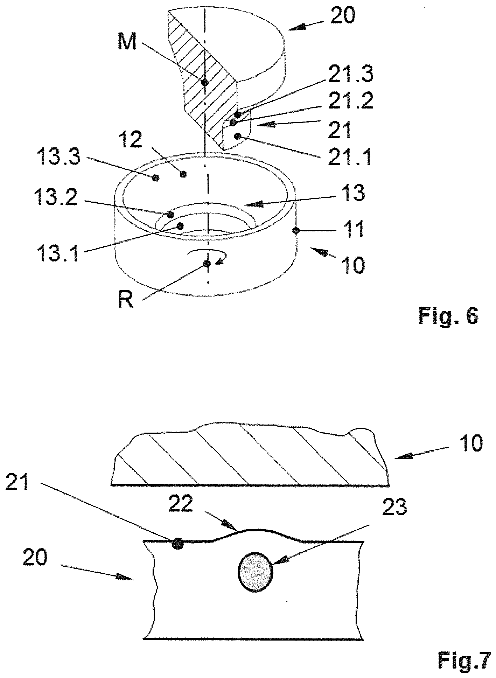

Fig. 6 zeigt ein Gleitlager, gemäß Fig. 3, wobei jedoch nun der Stator 20 und der Rotor 10 vertauscht sind.

In Fig. 7 ist eine Detaildarstellung eines Bereiches des Rotors 10 und des Stators 20 gezeigt. Dabei ist der in Fig. 7 gezeigte Teilbereich des Stators 20 beispielsweise ein Teil des Konturabschnittes 21 gemäß Fig. 1-6. Wie die Fig. 7 erkennen lässt, ist in den Stator 20 eine Bohrung 23 oder dergleichen Ausnehmung eingebracht. Diese Bohrung oder Ausnehmung 23 ist vorzugsweise bis in den Bereich des konvergierenden Spaltes S geführt. Wenn nun in der Bohrung oder Ausnehmung 23 ein Druck erzeugt wird, beispielsweise durch Eintreiben eines Stabes, so entsteht an der Lagerkontur, insbesondere im Bereich des hydrodynamischen wirksamen Spaltes S eine plastische oder elastische Verformung, die eine Erhebung 22 bildet. Dementsprechend wird also die Oberfläche der Gegenfläche 21 gezielt verformt. Abhängig von der Geometrie der Bohrung bzw. Ausnehmung 23 und des Druckes, lässt sich die Kontur der Erhebung 22 gezielt beeinflussen. Mittels der Erhebung 22 kann der Spaltverlauf und damit die hydrodynamische Druckerzeugung insbesondere im konvergierenden Spalt S gezielt beeinflusst werden. Mit dieser Maßnahme lässt sich eine weitere individuelle Anpassung des hydrodynamischen Gleitlagers an die anstehende Lageraufgabe bewirken. Selbstverständlich kann die Erhebung 22 auch am Rotor 10 vorgenommen werden. Weiterhin ist es möglich auch mehrere Erhebungen 22 am Rotor 10 und/oder Stator 20 vorzusehen.

Im Rahmen der Erfindung ist es weiterhin möglich, die Druckerzeugung im konvergierenden Spalt S zu verändern, wobei im Bereich des hydrodynamischen Spaltes S die Rotor-Lagerfläche 13 und/oder die Gegenfläche 21, Bereiche mit unterschiedlichem thermischem Ausdehnungskoeffizienten und/oder unterschiedlichem Elastizitätsmodul aufweisen können. Hierzu können die Rotor-Lagerfläche 13 und/oder die Gegenfläche 21, Zonen mit unterschiedlichen Materialien aufweisen. Beispielsweise kann im Bereich des konvergierenden Spaltes S eine Ausnehmung, insbesondere eine Bohrung vorgesehen sein, die in den Rotor 10 und/oder in den Stator 20 eingebracht ist. Diese Ausnehmung kann dann mit einem Material ausgefüllt sein, das einen anderen thermischen Ausdehnungskoeffizient und/oder einen anderen Elastizitätsmodul als das umgebende Material des Rotors 10 bzw. Stators 20 aufweist. Beispielsweise kann in die Ausnehmung ein Harzmaterial eingebracht sein, das Oberflächenbündig mit der Rotor-Lagerfläche 13 oder der Gegenfläche 21 abschließt. Denkbar ist es auch dass die Rotor-Lagerfläche 13 und/oder die Gegenfläche 21 Bereiche mit unterschiedlichem thermischem Ausdehnungskoeffizienten aufweisen, wobei insbesondere vorgesehen sein kann, dass in der Rotor-Lagerfläche und/oder der Gegenfläche ein Teilelement, insbesondere bestehend aus Oxidkeramik, oder aus einem anderen Element das einen niedrigeren thermischen Ausdehnungskoeffizienten aufweist, als der an das Teilelement mittelbar oder unmittelbar anschließende Bereich der Rotor-Lagerfläche und/oder der Gegenfläche. Beispiele für ein solches Teilelement sind Zirkoniumwolframat, Silizium, Titan, Stahl/Eisen. Die Rotor-Lagerfläche 13 und/oder die Gegenfläche 21 kann beispielsweise zumindest teilweise aus einem Bronzematerial, beispielsweise mit einem thermischen Ausdehnungskoeffizienten von ca. 18e-6 1/K gebildet sein.

Das erfindungsgemäße hydrodynamische Gleitlager eignet sich insbesondere zur Verwendung in Pumpen, Verdichtern, Getrieben und Abgasturboladern und insbesondere zur Lagerung von Rotoren, beispielsweise Spindeln wobei auch ein oder zwei hydrodynamische Gleitlager nach der Erfindung den Rotor lagern können.

## Patentansprüche

1. Hydrodynamisches Gleitlager mit einem Rotor (10) und einem Stator (20), wobei der Rotor (10) gegenüber dem Stator (20) drehbar ist, wobei eine Rotor-Lagerfläche (13) einer Gegenfläche (21) des Stators (20) zur hydrodynamischen Druckerzeugung im Bereich eines konvergierenden Spaltes gegenübersteht,
wobei die Rotor-Lagerfläche (13) und/oder die Gegenfläche (21) bei einem Schnitt längs und durch die Rotationsachse (R) in Schnittansicht, eine durchgehende Lagerkontur bildet, die aus wenigstens zwei Konturabschnitten (13.1 - 13.4, 21.1 - 21.4) gebildet ist, die als wenigstens eine Gerade und/oder wenigstens eine Wölbung ausgebildet sind, um hydrodynamische Tragfähigkeiten in radialer und axialer Richtung zu erzeugen,
wobei die zwei oder mehreren Konturabschnitte (13.1 - 13.4, 21.1 - 21.4) der Rotor-Lagerfläche (13) und/oder der Gegenfläche (21) die Rotor-Lagerfläche (13) und/oder die Gegenfläche (21) in Richtung der Rotationsachse (R) begrenzen,
und wobei zwischen diesen Konturabschnitten (13.1 - 13.4, 21.1 - 21.4) ein oder mehrere weitere Konturabschnitte (13.2, 21.2) angeordnet sind, um eine durchgehende stetig differenzierbare Lagerkontur zu bilden.

2. Hydrodynamisches Gleitlager nach Anspruch 1,
**dadurch gekennzeichnet,**
**dass** die Gestaltung der Rotor-Lagerfläche (13) derart von der Gestaltung der Gegenfläche (21) des Stators (20) abweicht,
**dass** die Rotor-Lagerfläche (13) und die Gegenfläche (21) nicht im Flächenkontakt aneinander liegen, insbesondere nicht vollflächig aneinander liegen.

3. Hydrodynamisches Gleitlager nach Anspruch 1 oder 2,
**dadurch gekennzeichnet,**
**dass** von der Rotor-Lagerfläche (13) und/oder der Gegenfläche (21) insbesondere einteilig angeformte Erhebungen (22) vorstehen.

4. Hydrodynamisches Gleitlager nach einem der Ansprüche 1 bis 3,
**dadurch gekennzeichnet,**
**dass** die Rotor-Lagerfläche (13) und die Gegenfläche (21) ein Mehrflächengleitlager, Kipp-Segmentlager oder ein zylindrisches Gleitlager aufweisen oder bilden.

5. Hydrodynamisches Gleitlager nach einem der Ansprüche 1 bis 4,
**dadurch gekennzeichnet,**
**dass** die Rotor-Lagerfläche (13) und/oder die Gegenfläche (21) Bereiche mit unterschiedlichem thermischem Ausdehnungskoeffizienten aufweisen, wobei insbesondere vorgesehen sein kann, dass in der Rotor-Lagerfläche (13) und/oder der Gegenfläche (21) ein Teilelement angeordnet ist, insbesondere bestehend aus Oxidkeramik oder aus einem anderen Element das einen niedrigeren thermischen Ausdehnungskoeffizienten aufweist, als der an das Teilelement mittelbar oder unmittelbar anschließende Bereich der Rotor-Lagerfläche (13) und/oder der Gegenfläche (21).

6. Hydrodynamisches Gleitlager nach einem der Ansprüche 1 bis 5,
**dadurch gekennzeichnet,**
**dass** die Rotor-Lagerfläche (13) und/oder die Gegenfläche (21) Bereiche mit unterschiedlichem Elastizitätsmodul oder konstruktiv bedingtem Verformungsverhalten aufweisen.

7. Hydrodynamisches Gleitlager nach einem der Ansprüche 1 bis 6,
**dadurch gekennzeichnet,**
**dass** zwischen den begrenzende Konturabschnitten (13.1 - 13.4, 21.1 - 21.4) der eine oder die mehreren weiteren Konturabschnitte (13.2, 21.2) angeordnet ist/sind, um über die gesamte Lagerkontur hinweg Tragfähigkeiten in axialer und/oder radialer Richtung zu ermöglichen.

8. Hydrodynamisches Gleitlager nach einem der Ansprüche 1 bis 7,
**dadurch gekennzeichnet,**
**dass** die Rotor-Lagerfläche (13) und/oder die Gegenfläche (21) mindestens einen konvexen und mindestens einen konkaven Konturabschnitt (13.1 - 13.4, 21.1 - 21.4) aufweist, die mittelbar über den weiteren Konturabschnitt (13.2, 21.2) oder unmittelbar ineinander übergeleitet sind.

## Claims

1. Hydrodynamic plain bearing with a rotor (10) and a stator (20), wherein the rotor (10) is rotatable relative to the stator (20), wherein a rotor bearing surface (13) faces a counter surface (21) of the stator (20) for hydrodynamic pressure generation in the region of a converging gap,
wherein the rotor bearing surface (13) and/or the counter surface (21), when cut longitudinally and through the axis of rotation (R) in sectional view, form a continuous bearing contour formed of at least two contour sections (13.1 - 13.4, 21.1 - 21.4), the at least two contour sections (13.1 - 13.4, 21.1 - 21.4) being formed as at least one straight line and/or at least one curvature to generate hydrodynamic load carrying capacities in radial and axial direction,
wherein the two or more contour sections (13.1 - 13.4, 21.1 - 21.4) of the rotor bearing surface (13) and/or the counter surface (21) bound the rotor bearing surface (13) and/or the mating surface (21) in the direction of the axis of rotation (R) and wherein one or more further contour sections (13.2, 21.2) are arranged between these contour sections (13.1 - 13.4, 21.1 - 21.4) in order to form a continuous continuously differentiable bearing contour.

2. Hydrodynamic plain bearing according to claim 1,
**characterized in**
**that** the design of the rotor bearing surface (13) deviates from the design of the counter surface (21) of the stator (20) in such a manner that the rotor bearing surface (13) and the counter surface (21) do not lie in surface contact with one another, in particular do not lie against one another over their entire surface.

3. Hydrodynamic plain bearing according to claim 1 or 2,
**characterized in**
**that** projections (22) protrude from the rotor bearing surface (13) and/or the counter surface (21), in particular projections (22) formed on in one piece.

4. Hydrodynamic plain bearing according to one of the claims 1 to 3,
**characterized in**
**that** the rotor bearing surface (13) and the counter surface (21) comprise or form a multi-surface plain bearing, tilting pad bearing or a cylindrical plain bearing.

5. Hydrodynamic plain bearing according to any one of claims 1 to 4,
**characterized in**
**that** the rotor bearing surface (13) and/or the counter surface (21) have regions with different coefficients of thermal expansion, it being possible in particular to provide that a partial element is arranged in the rotor bearing surface (13) and/or the mating surface (21), in particular consisting of oxide ceramic or of another element which has a lower coefficient of thermal expansion than the region of the rotor bearing surface (13) and/or of the mating surface (21) which is directly or indirectly adjacent to the partial element.

6. Hydrodynamic plain bearing according to one of claims 1 to 5,
**characterized in**
**that** the rotor bearing surface (13) and/or the counter surface (21) have regions with different modulus of elasticity or structurally determined deformation behaviour.

7. Hydrodynamic plain bearing according to any one of claims 1 to 6,
**characterized in**
**that** the one or more further contour sections (13.2, 21.2) is/are arranged between the delimiting contour sections (13.1 - 13.4, 21.1 - 21.4) in order to permit load-bearing capacities in the axial and/or radial direction over the entire bearing contour.

8. Hydrodynamic plain bearing according to any one of claims 1 to 7,
**characterized in**
**that** the rotor bearing surface (13) and/or the counter surface (21) has at least one convex and at least one concave contour section (13.1 - 13.4, 21.1 - 21.4), which are indirectly transferred into each other via the further contour section (13.2, 21.2) or directly.

## Revendications

1. Palier lisse hydrodynamique avec un rotor (10) et un stator (20), dans lequel le rotor (10) peut tourner par rapport au stator (20), dans lequel une surface d'appui du rotor (13) est tournée vers une contre-surface (21) du stator (20) pour la génération d'une pression hydrodynamique dans la région d'un écart convergent,
dans lequel la surface d'appui du rotor (13) et/ou la contre-surface (21), lorsqu'elles sont coupées longitudinalement et à travers l'axe de rotation (R) en vue en coupe, forment un contour d'appui continu formé d'au moins deux sections de contour (13.1 - 13.4, 21.1 - 21.4) formées comme au moins une ligne droite et/ou au moins une courbure pour générer des capacités de charge hydrodynamiques dans les directions radiale et axiale,
dans lequel les deux ou plusieurs sections de contour (13.1 - 13.4, 21.1 - 21.4) de la surface d'appui du rotor (13) et/ou de la contre-surface (21) délimitent la surface d'appui du rotor (13) et/ou la contre-surface (21) dans la direction de l'axe de rotation (R)
et dans lequel une ou plusieurs autres sections de contour (13.2, 21.2) sont disposées entre ces sections de contour (13.1 - 13.4, 21.1 - 21.4) afin de former un contour de palier continu différentiable.

2. Palier lisse hydrodynamique selon la revendication 1,
**caractérisé en ce**
**que** la conception de la surface d'appui du rotor (13) s'écarte de la conception de la contre-surface (21) du stator (20) de telle manière que la surface d'appui du rotor (13) et la contre-surface (21) ne sont pas en contact superficiel l'une avec l'autre, en particulier ne sont pas en contact l'une avec l'autre sur toute leur surface.

3. Palier lisse hydrodynamique selon la revendication 1 ou 2,
caractérisé en ce à partir de la surface d'appui du rotor (13) et/ou de la contre-surfaces (21), élévations fait saillie en particulier des saillies (22) formées d'un seul tenant.

4. Palier lisse hydrodynamique selon l'une des revendications 1 à 3,
**caractérisé en ce**
**que** la surface d'appui du rotor (13) et la contre-surface (21) comprennent ou forment un palier lisse à surfaces multiples, un palier à patins basculants ou un palier lisse cylindrique.

5. Palier lisse hydrodynamique selon l'une quelconque des revendications 1 à 4,
**caractérisé en ce**
**que** la surface d'appui du rotor (13) et/ou la contre-surface (21) présentent des zones avec des coefficients de dilatation thermique différents, en particulier il est possible de prévoir que dans la surface d'appui du rotor (13) et/ou la contre-surface (21) soit disposé un élément partiel, en particulier en céramique oxydée ou en un autre élément qui présente un coefficient de dilatation thermique plus faible que la zone de la surface d'appui du rotor (13) et/ou de la contre-surface (21) qui est directement ou indirectement adjacente à l'élément partiel.

6. Palier lisse hydrodynamique selon l'une des revendications 1 à 5,
**caractérisé en ce**
**que** la surface d'appui du rotor (13) et/ou la contre-surface (21) présentent des zones ayant un module d'élasticité différent ou un comportement de déformation déterminé par la structure.

7. Palier lisse hydrodynamique selon l'une quelconque des revendications 1 à 6,
**caractérisé en ce**
**que** la ou les autres sections de contour (13.2, 21.2) est/sont disposée(s) entre les sections de contour (13.1 - 13.4, 21.1 - 21.4) (13.1 - 13.4, 21.1 - 21.4) afin de permettre des capacités de charge dans la direction axiale et/ou radiale sur l'ensemble du contour du palier.

8. Palier lisse hydrodynamique selon l'une quelconque des revendications 1 à 7,
**caractérisé en ce**
**que** la surface d'appui du rotor (13) et/ou la contre-surface (21) présente au moins une section de contour convexe et au moins une section de contour concave (13.1 - 13.4, 21.1 - 21.4), qui sont transférées l'une dans l'autre indirectement par l'intermédiaire de l'autre section de contour (13.2, 21.2) ou directement.
